# EUROPÄISCHE PATENTANMELDUNG

(11) **EP 0 842 806 A1**
(43) Veröffentlichungstag der Anmeldung: **20.05.1998**
(21) Anmeldenummer: 96118321.7
(22) Anmeldetag: 15.11.1996
(51) Int. Cl.: B60N 2/00

(54) **Vorrichtung zur Befestigung eines Fahrgastsitzes**

(71) Anmelder: Vogel Industrie GmbH, 76228 Karlsruhe (DE)
(72) Erfinder: Vogel, Heiner, 76228 Karlsruhe (DE); Weiler, Klaus, 76228 Karlsruhe (DE)
(74) Vertreter: Trappenberg, Hans

(57) **Zusammenfassung**

Eine Vorrichtgung zur Befestigung von Fahrgastsitzen in einem Personenbeförderungsfahrzeug weist einen sich länglich erstreckenden Träger 1 auf, auf dem das Sitzteil des Fahrgastsitzes befestigt ist. Der Träger 1 ist an einem Halteelement 2 befestigt, welches an der dem Träger 1 abgewandten Seite etwa in der Höhe des Trägers 1 Mittel 3 zum Einhaken des Halteelements 2 in einer entsprechend ausgebildeten ersten Ausnehmung einer Seitenwand des Fahrzeuges hat. Das Halteelement 2 weist einen in Querrichtung zum Träger 1 in einem Abstand zum Einhakmittel 3 angeordneten Stützfuß 4 auf. Der Stützfuß 4 hat Mittel 5 zum Einstecken des Stützfußes 4 in eine entsprechend ausgebildete zweite Ausnehmung der Seitenwand des Fahrzeuges.

## Beschreibung

Die Erfindung betrifft eine Vorrichtung zur freitragenden Befestigung eines Fahrgastsitzes an der Seitenwand eines Personenbeförderungsfahrzeuges mit einem sich länglich erstreckenden Träger, auf dem das Sitzteil des Fahrgastsitzes befestigt ist.

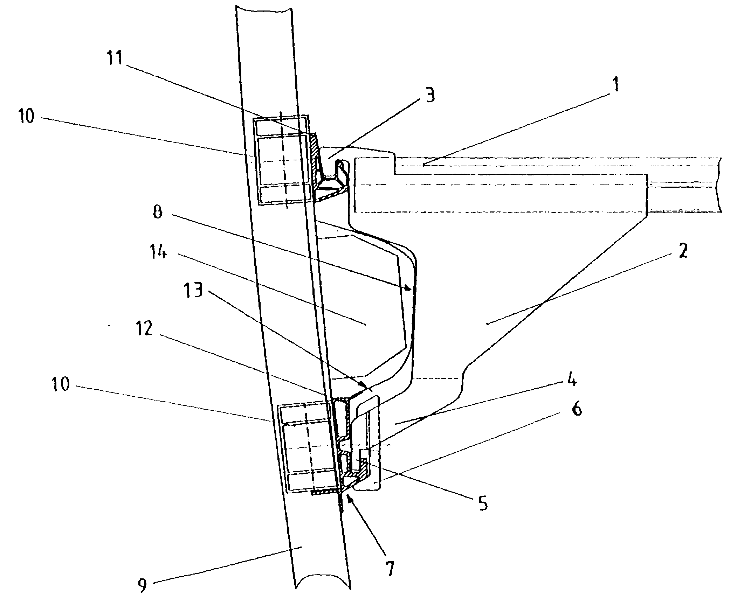

Eine derartige Vorrichtung ist beispielsweise aus der EP 0627338 A 1 bekannt. Bei der bekannten Vorrichtung ist das Sitzteil des Sitzes auf einem kastenförmigen Profil befestigt, welches sich quer zum Sitz erstreckt. Der Kastenholm ist einerseits direkt mit der Seitenwand des Fahrzeuges verbunden und andererseits über abgewinkelte Schrägstützen mit der Seitenwand unterhalb der direkten Befestigung verbunden. Zwar ist über die Art der Befestigung des Kastenholms beziehungswseise der Schrägstützen mit der Seitenwand in der genannten Druckschrift nichts Näheres ausgesagt, jedoch kann der Figur entnommen werden, daß zumindest die Schrägstützen mit der Seitenwand verschraubt werden sollen. Es kann daher davon ausgegangen werden, daß auch der Kastenholm mit der Seitenwand verschraubt ist. Dies entspricht zudem auch der bisher bekannten üblichen Befestigungsart von Sitzen, welche mit der Seitenwand des Fahrzeuges verbunden sind.

Eine derartige Befestigungsart ist recht aufwendig, da zur Verbindung der entsprechenden Elemente mit der Seitenwand in die Seitenwand Löcher gebohrt werden müssen. Darüber hinaus ist man bei einer derartigen Befestigung an die einmal vorgegebene Position gebunden. Selbst kleinere Verschiebungen in die eine oder andere Richtung sind ohne erneutes Bohren von Löchern in die Seitenwand nicht möglich.

Es ist Aufgabe der Erfindung eine eingangs genannte Vorrichtung so auszubilden, daß der Fahrgastsitz auf einfache Art und Weise im Fahrzeug montiert werden kann, wobei die Befestigungsposition variabel ist.

Die Lösung dieser Aufgabe ergibt sich aus den Merkmalen des kennzeichnenden Teils des Anspruchs 1. Vorteilhafte Weierbildungen der Erfindung ergeben sich aus den Unteransprüchen.

Gemäß der Erfindung ist der Träger an einem Haltelement befestigt, welches an der dem Träger abgewandten Seite etwa in der Höhe des Trägers Mittel zum Einhaken des Halteelements in eine entsprechend ausgebildete Ausnehmung einer Seitenwand des Fahrzeugs, welches insbesondere ein Bus sein kann, hat und einen sich in Querrichtung zum Träger in einem Abstand zum Einhakmittel angeordneten Stützfuß aufweist, welcher Stützfuß Mittel zum Einstecken des Stützfußes in eine entsprechend ausgebildete Ausnehmung der Seitenwand des Fahrzeuges hat. Hierdurch ist es möglich, das Halteelement und damit den mittels des Trägers mit dem Halteelement verbundenen Sitz durch Einbringen der Einhak- beziehungsweise Einsteckmittel in die entsprechenden Ausnehmungen in der Seitenwand des Fahrzeuges mit dem Fahrzeug zu verbinden. Der Sitz wird nicht mehr mittels Schrauben oder ähnlicher Befestigungselemente mit der Fahrzeugwand verbunden, sondern lediglich in die entsprechenden Ausnehmungen eingehängt. Hierdurch läßt sich der Sitz mit wenigen Handgriffen mit dem Fahrzeug verbinden beziehungsweise aus dem Fahrzeug entfernen. Der Abstand der Steckmittel von den Einhakmitteln richtet sich zum einen nach der Ausbildung des Halteelements und zum anderen nach der Länge des Trägers.

Zur Fixierung des Sitzes ist in vorteilhafter Weise eine Klammer vorgesehen, mittels welcher die Einsteckmittel in der zweiten Ausnehmung gehalten werden. Die Fixierung des Sitzes kann erfolgen, nachdem der Sitz bereits in die Fahrzeugwand eingehängt worden ist.

Besonders vorteilhaft ist es,wenn die erste und die zweite Ausnehmung in einer ersten beziehungsweise zweiten Profilschiene angeordnet sind, welche an der Seitenwand des Fahrzeuges angebracht sind. Durch die Verwendung von Profilschienen erreicht man einen hohen Grad an Flexibilität. Durch Verschieben des Halteelementes in den Profilschienen kann der Sitz nahezu an jeder beliebigen Stelle des Fahrzeuges angebracht werden. Bei der Vorbereitung der Befestigung des Sitzes braucht daher keine sehr große Sorgfalt mehr aufgebracht werden. Lediglich der Abstand der Profilschienen muß genau eingehalten werden.

Bei einer weiteren besonderen Ausführungsform der Erfindung ist vorgesehen, daß der Stützfuß eine erste Schräge und die zweite Profilschiene eine zweite Schräge aufweisen, an welche die Klammer angreift. Durch das Einwirken der Klammer auf die beiden Schrägen wird erreicht, daß der Stützfuß in Richtung Grund der Ausnehmung und in Richtung Seitenwand der Ausnehmung gezogen wird. Hierdurch findet eine feste Verkeilung der Einhakmittel in der zweiten Ausnehmung statt.

Als besonders vorteilhaft hat sich eine weitere Ausführungsform der Erfindung herausgestellt, bei der die erste Ausnehmung und der sich in die erste Ausnehmung erstreckende Teil der Einhakmittel konisch ausgebildet sind. Hierdurch wird erreicht, daß das Einhakmittel nicht mehr vollständig in die Ausnehmung hineingleitet, sondern nur so tief, bis die Flanken der ersten Ausnehmung und des Einhakmittels formschlüssig aufeinanderstehen. Auf diese Weise wird ein Wackeln des Halteelementes in der ersten Ausnehmung verhindert.

Sind die erste und die zweite Profilschiene beziehungsweise die Einhakmittel und die Einsteckmittel in einem solchen Abstand voneinander angebracht, daß die Tiefe der Einsteckmittel in die zweite Ausnehmung von dem konischen Sitz der Einhakmittel in der ersten Ausnehmung begrenzt wird, kann das Halteelement vollständig in den Ausnehmungen verkeilt werden. Der Sitz des Halteelementes in den Ausnehmungen ist daher sehr fest und spielfrei. Während des Betriebs des Fahrzeuges treten daher keine Geräusche aufgrund eines Spiels auf.

Durch die einfache Montage des erfindungsgemäßen Fahrgastsitzes ist es möglich, die Bestuhlung eines Fahrzeuges auf einfache Weise sehr schnell zu verändern. Ein mit dem erfindungsgemäßen Fahrgastsitz bestücktes Fahrzeug kann daher sehr leicht für besondere Verwendungen hergerichtet werden.

Das Halteelement ist in vorteilhafter Weise als Gußträger ausgebildet. Es kann jedoch auch ein Blechkörper sein, wenn dies zweckmäßig sein sollte. So kann das Halteelement leichter ausgebildet sein, wenn es zur Aufnahme eines Sitzes vorgesehen ist, als wenn es zur Aufnahme eines Doppelsitzes vorgesehen ist.

Weitere Vorteile und Merkmale der vorliegenden Erfindung ergeben sich aus der nachfolgenden Beschreibung eines besonderen Ausführungsbeispiels unter Bezugnahme auf die Zeichnung.

Es zeigt die einzige Figur eine schematische Darstellung einer erfindungsgemäßen Vorrichtung.

Ein sich länglich erstreckender Träger 1, auf welchen das nicht gezeigte Sitzteil eines Fahrgastsitzes befestigbar ist, ist mit einem Halteelement 2 verbunden. Der Träger 1 ist als Profilrohr ausgebildet. Das Halteelement 2 ist als Gußträger ausgebildet. Die Befestigung des Trägers 1 auf dem Halteelement 2 geschieht auf herkömmliche Art und Weise, beispielsweise mittels Schrauben oder Nieten. Der Träger 1 kann jedoch auch auf das Halteelement 2 geschweißt sein, wenn dies zweckdienlich ist. An der dem Träger abgewandten Seite weist das Halteelement 2 etwa in Höhe des Trägers 1 einen hakenförmig ausgebildeten Vorsprung 3 auf. Das Halteelement 2 hat etwa die Form eines rechtwinkligen Dreiecks. Die Seite des Halteelements 2, welche sich etwa rechtwinklig zum Träger 1 erstreckt, weist eine Ausnehmung 8 auf. Hierdurch ist das Halteelement 2 an dem dem Träger 1 abgewandten Ende der Seite mit der Ausnehmung 8 armförmig ausgebildet. Der armförmig ausgebildete Teil 4, weist an seinem äußeren Ende einen laschenförmigen Vorsprung (5) auf, wodurch der Arm als Stützfuß wirkt.

In der schematisch dargestellten Seitenwand 9 des Personenbeförderungsfahrzeugs sind Querträger 10 angeordnet. An dem oberen Querträger 10 ist eine erste Profilschiene 11 und an dem unteren Querträger 10 eine zweite Profilschiene 12 befestigt. Die erste Profilschiene 11 weist eine Längsnut auf, in welche der hakenförmige Vorsprung 3 des Halteelements 2 eingreift. Die Nut sowie der sich in die Nut erstreckende Teil des hakenförmigen Vorsprungs 3 sind konisch ausgebildet.

Die zweite Profilschiene 12 weist eine zweite Längsnut auf, in die sich der laschenförmige Vorsprung 5 des Halteelements 2 erstreckt. Die erste Profilschiene 11 und die zweite Profilschiene 12 sowie der hakenförmige Vorsprung 3 und die laschenförmige Erstreckung 5 sind in einem solchen Abstand voneinander angeordnet, daß die Eindringtiefe der laschenförmigen Erstreckung 5 in die Längsnut der zweiten Profilschiene 12 von dem konischen Sitz des hakenförmigen Vorsprungs 3 in der Längsnut der ersten Profilschiene 11 begrenzt wird. Hierdurch wird erreicht, daß der hakenförmige Vorsprung 3 fest verkeilt in der Längsnut der ersten Profilschiene 11 sitzt.

Der Arm 4 des Halteelements 2 weist an der der laschenförmigen Erstreckung 5 abgewandten Seite eine erste Schräge 13 auf. Die zweite Profilschiene 12 weist an der der Öffnung der Längsnut abgewandten Seite eine zweite Schräge 7 auf. Bei in die Längsnut der zweiten Profilschiene 12 eingesteckter laschenförmiger Erstreckung 5 wird die erste Schräge 13 und die zweite Schräge 7 von einer entsprechend ausgebildeten Klammer 6 umgriffen. Die erste Schräge 13 und die zweite Schräge 7 sowie die Klammer 6 sind so ausgebildet, daß bei einer Bewegung der Klammer 6 quer zu den Wandungen der Längsnut der zweiten Profilschiene 12 sowie der Wandungen der zapfenförmigen Erstreckung 5 in Richtung der Wandung 9 des Fahrzeuges die zapfenförmige Erstreckung 5 in die Längsnut gezogen wird, wodurch sich eine Verklemmung der laschenförmigen Erstreckung 5 in der Längsnut ergibt. Die Eindringtiefe der laschenförmigen Erstreckung 5 in die Längsnut wird jedoch, wie bereits erwähnt wurde, durch die Eindringtiefe des konischen Hakens 3 in die konisch ausgbildete Längsnut der ersten Profilschiene 11 begrenzt. Die Klammer 6 wird beispielsweise mittels einer nicht gezeigten Schraube an dem Halteelement 2 beziehungsweise an der zweiten Profilschiene 12 befestigt.

Im Bereich der Ausnehmung 8 des Halteelements 2 verläuft in vorteilhafter Weise eine Konvektorheizung 14. Besonders vorteilhaft ist es jedoch, wenn im Bereich der Ausnehmung des Halteelements 2 ein Betriebskanal vorgesehen ist, welcher sich durch das Fahrzeug erstreckt und Leitungen zur Versorgung des Fahrzeuginnenraumes mit Wärme, elektrischer Energie und/oder Signalen enthält. Ein weiterer Vorteil wird dadurch erreicht, daß der Betriebskanal als Profilschiene ausgebildet ist, welche voneinander getrennte Leitungen aufweist, durch die erhitztes Wasser geführt wird. Durch Lamellen, welche auf die Oberfläche des Betriebskanals aufgebracht werden, kann die wirksame Oberfläche des Betriebskanals vergrößert werden. Besonders vorteilhaft ist es, wenn die Lamellen jeweils zu Elementen bestimmter Länge zusammengefaßt sind und die Elemente lösbar mit dem Kanal verbunden sind. Ein weiterer Vorteil kann dadurch erreicht werden, daß der Betriebskanal eine von außen frei zugängliche Stromschiene aufweist, auf die Stromabnehmer lösbar befestigbar sind.

Einen weiteren Vorteil erhält man dadurch, daß der Betriebskanal im Abstand voneinander angeordnete Anschlüsse aufweist, mittels der auf die Versorgungsleitungen zugegriffen werden kann. Besonders vorteilhaft ist es, wenn die Anschlüsse als selbstbetätigbare Schnellverschlüsse ausgebildet sind. In Verbindung mit den letztgenannten Merkmalen ist es besonders vorteilhaft, wenn das Halteelement 2 Anschlüsse aufweist, welche mit den Anschlüssen des Betriebskanals korrespondieren. Hierdurch ist es möglich, den Sitz bei der Herstellung mit Leitungen zu versehen, welche beispielsweise zu einer im Sitz angeordneten elektrischen- oder Warmwasserheizung führen, oder zu Geräten, welche Audio- oder Videosignale in Töne oder Bilder umsetzen. Auch können im Sitz Signalgeber oder -melder angeordnet sein, welche mittels separater Signalleitungen, welche ebenfalls über Anschlüsse mit im Betriebskanal befindlichen Signalleitungen verbunden werden. Wird die erste Profilschiene 11 und die zweite Profilschiene 12 und der Betriebskanal als ein Strangpreßprofil hergestellt, erhält man ein Element, welches den Fahrgastsitz nicht nur trägt sondern alle für ein modernes Personenbeförderungsfahrzeug erforderlichen Merkmale zur Verfügung stellt.

Der zuletzt beschriebene Betriebskanal ist ausführlich in der gleichzeitig eingereichten Patentanmeldung der Anmelderin mit dem Titel "Personenbeförderungsfahrzeug mit Betriebskanal" beschrieben. Wegen der Bedeutung des Betriebskanals für die vorliegende Erfindung wird die genannte gleichzeitig eingereichte Patentanmeldung der Anmelderin in die vorliegende Anmeldung vollständig miteinbezogen.

## Patentansprüche

1. Vorrichtung zur freitragenden Befestigung eines Fahrgastsitzes an der Seitenwand eines Personenbeförderungsfahrzeuges mit einem sich länglich erstreckenden Träger (1), auf dem das Sitzteil des Fahrgastsitzes befestigt ist,
dadurch gekennzeichnet,
daß der Träger (1) an einem Halteelement (2) befestigt ist, welches an der dem Träger (1) abgewandten Seite etwa in der Höhe des Trägers (1) Mittel (3) zum Einhaken des Halteelements (2) in einer entsprechend ausgebildeten ersten Ausnehmung einer Seitenwand des Fahrzeuges hat und einen in Querrichtung zum Träger (1) in einem Abstand zum Einhakmittel (3) angeordneten Stützfuß (4) aufweist, welcher Stützfuß (4) Mittel (5) zum Einstecken des Stützfußes (4) in eine entsprechend ausgebildete zweite Ausnehmung der Seitenwand des Fahrzeuges hat.

2. Fahrgastsitz nach Anspruch 1,
dadurch gekennzeichnet,
daß die erste Ausnehmung als Längsnut in einer ersten Profilschiene und die zweite Ausnehmung als Längsnut in einer zweiten Profilschiene angeordnet sind, welche an der Seitenwand des Fahrzeuges angebracht sind.

3. Fahrgastsitz nach Anspruch 1 oder 2,
dadurch gekennzeichnet,
daß eine Klammer (6) vorgesehen ist, mittels welcher die Einsteckmittel (5) in der zweiten Ausnehmung fixiert werden.

4. Fahrgastsitz nach Anspruch 3,
dadurch gekennzeichnet,
daß der Stützfuß (4) eine erste Schräge (13) und die zweite Profilschiene eine zweite Schräge (7) aufweisen, an welche die Klammer (6) angreift.

5. Fahrgastsitz nach einem der Ansprüche 1 bis 4,
dadurch gekennzeichnet,
daß die erste Ausnehmung und der sich in die erste Ausnehmung erstreckende Teil der Einhakmittel (3) konisch ausgebildet sind.

6. Fahrgastsitz nach einem der Ansprüche 1 bis 5,
dadurch gekennzeichnet,
daß die erste und die zweite Profilschiene beziehungsweise die Einhakmittel (3) und die Einsteckmittel (5) in einem solchen Abstand voneinander angeordnet sind, daß die Eindringtiefe der Einsteckmittel (5) in die zweite Ausnehmung von dem konischen Sitz der Einhakmittel (3) in der ersten Ausnehmung begrenzt wird.
